# EUROPEAN PATENT SPECIFICATION

(11) **EP 3 684 874 B1**
(45) Date of publication and mention of the grant of the patent: **03.11.2021**
(21) Application number: 18779784.0
(22) Date of filing: 12.09.2018
(51) Int. Cl.: C09D 183/04, C09D 183/06, C09D 183/08, C08G 77/04, C08G 77/14, C08G 77/26, C08G 77/28, C09J 7/20, C08L 79/00, D06N 3/12

(54) **POLYCARBODIIMIDE-CONTAINING COMPOSITIONS, METHODS, AND ARTICLES**
POLYCARBODIIMID-HALTIGE ZUSAMMENSETZUNGEN, VERFAHREN UND GEGSENSTÄNDE
COMPOSITIONS CONTENANT DU POLYCARBODIIMIDE, PROCÉDÉS ET OBJETS

(30) Priority: 22.09.2017 US 201762562034 P
(43) Date of publication of application: 29.07.2020
(73) Proprietor: 3M Innovative Properties Company, Saint Paul, Minnesota 55133-3427 (US)
(72) Inventor: CHEN, Lin, Saint Paul, Minnesota 55133-3427 (US); JARIWALA, Chetan P., Saint Paul, Minnesota 55133-3427 (US); RATHORE, Jitendra Singh, Saint Paul, Minnesota 55133-3427 (US)
(74) Representative: Vossius & Partner Patentanwälte Rechtsanwälte mbB
(86) International application number: PCT/IB2018/056974
(87) International publication number: WO 2019/058217

(56) References cited:
- JP-A- 2006 219 570
- US-A1- 2007 026 226
- US-A1- 2009 074 975
- US-A1- 2009 171 014
- US-A1- 2016 319 156

## Description

### BACKGROUND

Traditionally, fabrics have been rendered water repellent due to the application of a fluorochemical to the fabric; however, fluorine-free materials are more desirable in some applications. Thus, there is a desire for new fluorine-free materials. US 2009/074975 discloses a composition for rendering an article water repellent, comprising a blend of a fluorochemical ester and a carbodiimide.

### SUMMARY OF THE DISCLOSURE

The present disclosure provides polycarbodiimide-containing compositions, methods of using such compositions (e.g., to treat fibrous substrates), and articles treated with such compositions. The compositions include a polycarbodiimide and a silicon-containing compound selected from cyclic siloxanes, silsesquioxane (SSQ) polymers, or mixtures thereof.

In one embodiment, a treating composition includes a polycarbodiimide and a cyclic siloxane compound, wherein the cyclic siloxane has the following Formula (I): 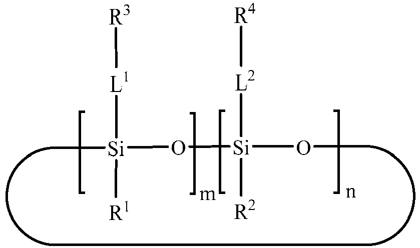 wherein:
each R¹ and R² is independently a (C1-C4)alkyl;
each L¹ and L² is independently a single bond, an alkylene, or an alkylene bonded to a group selected from oxy, thio, carbonyl, -NH-, and combinations thereof;
each R³ is independently a linear (C 14-C 100)alkyl;
each R⁴ is independently a (C1-C30)alkyl, a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group;
with the proviso that L¹, L², and R⁴ are selected such that each Si atom is directly bonded to an alkylene or an alkyl (other than R¹ and R²);
m is an integer of at least 2;
n is an integer of 0 or above;
m + n is an integer of at least 3; and
the cyclic siloxane compound is a solid at 25°C.

In one embodiment, a treating composition includes a polycarbodiimide and a silsesquioxane polymer that includes a three-dimensional network of Formula (II): 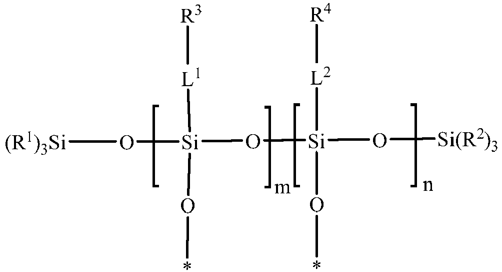 wherein:
each R¹ and R² is independently a (C1-C4)alkyl;
each L¹ and L² is independently a single bond, an alkylene, or an alkylene bonded to a group selected from oxy, thio, carbonyl, -NH-, and combinations thereof;
each R³ is independently a linear (C14-C100)alkyl;
each R⁴ is independently a (C1-C30)alkyl, a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group;
with the proviso that L¹, L², and R⁴ are selected such that each Si atom is directly bonded to an alkylene or an alkyl;
m is an integer of at least 2;
n is an integer of 0 or above;
m + n is an integer of at least 3;
each oxygen atom at an asterisk (*) is bonded to another Si atom within the three-dimensional network; and
the silsesquioxane polymer is a solid at 25°C.

In another embodiment, a method of treating a substrate (e.g., a fibrous substrate) is provided that includes applying to the substrate a treating composition as described herein in an amount sufficient to make the substrate water repellent. In another embodiment, a substrate (e.g., a fibrous substrate) treated by such method is provided.

As used herein, "alkyl" refers to a monovalent group that is a radical of an alkane and includes straight-chain (i.e., linear), branched, cyclic, and bicyclic alkyl groups, and combinations thereof, including both unsubstituted and substituted alkyl groups. Unless otherwise indicated, the alkyl groups typically contain from 1 to 100 carbon atoms. In some embodiments, the alkyl groups contain 1 to 60 carbon atoms, 1 to 30 carbon atoms, 1 to 10 carbon atoms, 1 to 6 carbon atoms, 1 to 4 carbon atoms, or 1 to 3 carbon atoms. Examples of "alkyl" groups include, but are not limited to, methyl, ethyl, n-propyl, n-butyl, n-pentyl, isobutyl, t-butyl, isopropyl, n-octyl, n-heptyl, ethylhexyl, cyclopentyl, cyclohexyl, cycloheptyl, adamantyl, norbornyl, and the like.

The term "alkylene" refers to a divalent group that is a radical of an alkane and includes groups that are linear, branched, cyclic, bicyclic, or a combination thereof. Unless otherwise indicated, the alkylene group typically has 1 to 100 carbon atoms. In some embodiments, the alkylene group has 1 to 60 carbon atoms, 1 to 30 carbon atoms, 1 to 10 carbon atoms, 1 to 6 carbon atoms, or 1 to 4 carbon atoms. Examples of "alkylene" groups include methylene, ethylene, propylene, 1,4-butylene, 1,4-cyclohexylene, and 1,4-cyclohexyldimethylene.

The term "heteroalkyl" means an alkyl group having at least one -CH₂- replaced with a heteroatom such as -NH-, -O-, or -S-.

The term "carbonyl" means a divalent group of formula -C(O)- where the carbon atoms is bonded to the oxygen with a double bond.

The term "oxy" means a divalent group of formula -O-.

The term "thio" means a divalent group of formula -S-.

The term "hydroxyl" means a monovalent group of formula -OH.

The term "thiol" means a monovalent group of formula -SH.

The term "isocyanato" means a monovalent group of formula -N=C=O.

The term "cyanato" means a monovalent group of formula -CN.

The term "glycidoxy" (also known as glycidyloxy) means an oxiran-2-yl-methyloxy group of the formula: 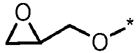 wherein the (*) represents the point of attachment to a molecule.

The term "epoxy" means an oxiranyl group of the formula: 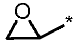 wherein the (*) represents the point of attachment to a molecule.

The term "hydrophobic layer" means a layer on which a water droplet has a contact angle of at least 90 degrees.

As used herein, the term "room temperature" refers to a temperature of 20°C to 25°C or 22°C to 25°C.

The term "in the range" or "within a range" (and similar statements) includes the endpoints of the stated range.

Groupings of alternative elements or embodiments disclosed herein are not to be construed as limitations. Each group member may be referred to and claimed individually or in any combination with other members of the group or other elements found therein. It is anticipated that one or more members of a group may be included in, or deleted from, a group for reasons of convenience and/or patentability. When any such inclusion or deletion occurs, the specification is herein deemed to contain the group as modified thus fulfilling the written description of all Markush groups used in the appended claims.

When a group is present more than once in a formula described herein, each group is "independently" selected, whether specifically stated or not. For example, when more than one L group is present in a formula, each L group is independently selected.

Reference throughout this specification to "one embodiment," "an embodiment," "certain embodiments," or "some embodiments," etc., means that a particular feature, configuration, composition, or characteristic described in connection with the embodiment is included in at least one embodiment of the invention. Thus, the appearances of such phrases in various places throughout this specification are not necessarily referring to the same embodiment of the invention. Furthermore, the particular features, configurations, compositions, or characteristics may be combined in any suitable manner in one or more embodiments.

The above summary of the present disclosure is not intended to describe each disclosed embodiment or every implementation of the present invention. The description that follows more particularly exemplifies illustrative embodiments. In several places throughout the application, guidance is provided through lists of examples, which examples may be used in various combinations. In each instance, the recited list serves only as a representative group and should not be interpreted as an exclusive list. Thus, the scope of the present disclosure should not be limited to the specific illustrative structures described herein, but rather extends at least to the structures described by the language of the claims, and the equivalents of those structures. Any of the elements that are positively recited in this specification as alternatives may be explicitly included in the claims or excluded from the claims, in any combination as desired. Although various theories and possible mechanisms may have been discussed herein, in no event should such discussions serve to limit the claimable subject matter.

### BRIEF DESCRIPTION OF THE DRAWINGS

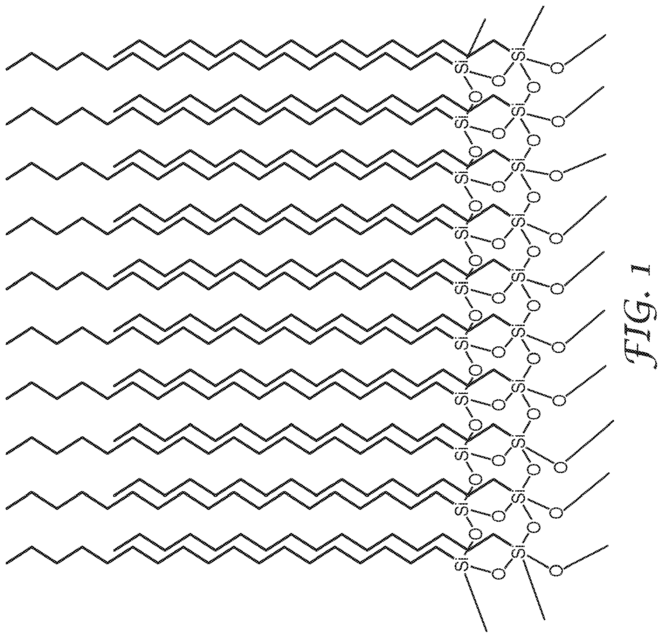

FIG. 1 is a schematic representation of co-crystallized hydrocarbon chains in a representative silsesquioxane polymer.

### DETAILED DESCRIPTION OF ILLUSTRATIVE EMBODIMENTS

The present disclosure provides treating compositions, particularly aqueous treating compositions, methods of using such compositions (e.g., to treat fibrous substrates), and treated articles. The compositions include a polycarbodiimide and a silicon-containing compound selected from cyclic siloxanes, silsesquioxane (SSQ) polymers, or mixtures thereof.

In certain embodiments of treating compositions of the present disclosure, the silicon-containing compound is present in an amount of at least 10 percent by weight (wt-%), at least 20 wt-%, or at least 30 wt-%, based on the total weight of solids in a treating composition. In certain embodiments, the silicon-containing compound is present in an amount of up to 70 wt-%, up to 60 wt-%, or up to 50 wt-%, based on the total weight of solids in a treating composition.

In certain embodiments of treating compositions of the present disclosure, the polycarbodiimide is present in an amount of at least 30 wt-%, at least 40 wt-%, or at least 50 wt-%, based on the total weight of solids in a treating composition. In certain embodiments, the polycarbodiimide is present in an amount of up to 90 wt-%, up to 80 wt-%, or up to 90 wt-%, based on the total weight of solids in a treating composition.

### Cyclic Siloxane Compounds

The cyclic siloxane compounds of the compositions of the present disclosure display excellent water repellent properties when combined with one or more polycarbodiimides and applied to a substrate, particularly a fibrous substrate. The unique structure of the cyclic siloxane compounds allows the hydrocarbon chains to co-crystallize, which is believed to contribute to the water repellent properties.

In one embodiment, a cyclic siloxane compound is provided that is solid at 25°C and has Formula (I): 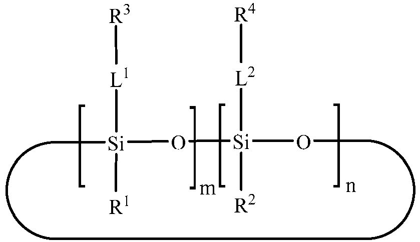 wherein this structure indicates the building blocks of the compound. In typical compounds, the -L¹-R³-containing repeat units and the -L²-R⁴-containing units are randomly distributed therein.

In Formula (1), each R¹ and R² is independently a (C1-C4)alkyl (e.g., methyl group). In certain embodiments, each R¹ and R² is a methyl group.

In Formula (I), each L¹ and L² is independently a single bond, an alkylene, or an alkylene bonded to a group selected from oxy, thio, carbonyl, -NH-, and combinations thereof (e.g., carbonyloxy (-C(O)-O-) or carbonylamino (-C(O)-NH-)). Typically, in each of L¹ and L² there is only one of such group or combination thereof (e.g., only one oxy, thio, carbonyl, -NH-, carbonyloxy, or carbonylamino).

In certain embodiments of Formula (I), each L¹ is a single bond. In certain embodiments, at least a portion of the L¹ groups are single bonds, and at least a portion of the L¹ groups are an alkylene bonded to a group selected from oxy, thio, carbonyl, -NH-, and combinations thereof.

In certain embodiments of Formula (I), each L² is a single bond. In certain embodiments, at least a portion of the L² groups are single bonds, and at least a portion of the L² groups are an alkylene bonded to a group selected from oxy, thio, carbonyl, -NH-, and combinations thereof.

In Formula (I), each R³ is independently a linear (C14-C100)alkyl. In certain embodiments, each R³ is independently a linear (C14-C60)alkyl. In certain embodiments, each R³ is independently a linear (C16-C60)alkyl. In certain embodiments, each R³ is independently a linear (C18-C30)alkyl.

In Formula (I), each R⁴ is independently a (C1-C30)alkyl, a (C2-C30)heteroalkyl having at least one oxygen, sulfur, or -NH- group (in certain embodiments, multiples of such hetero groups are included), or a (C1-C30)alkyl substituted with a fluoro, thiol, isocyanato, cyanato, hydroxyl, glycidoxy, or epoxy group. Such groups may be nonreactive or reactive to allow, for example, bonding to a substrate.

In certain embodiments of Formula (I), each R⁴ is independently a (C1-C30)alkyl. In certain embodiments, each R⁴ is independently a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group. In certain embodiments, at least a portion of the R⁴ groups are independently a (C1-C30)alkyl, and at least a portion of the R⁴ groups are independently a (C2-C30)heteroalkyl having at least one oxygen, sulfur, or - NH- group, or a (C1-C30)alkyl substituted with a fluoro, thiol, isocyanato, cyanato, hydroxyl, glycidoxy, or epoxy group.

In Formula (I), L¹, L², and R⁴ are selected such that each Si atom is directly bonded to an alkylene or an alkyl (other than R¹ and R²).

In Formula (I), m is an integer of at least 2.

In Formula (I), n is an integer of 0 or above. In certain embodiments, n = 0.

In Formula (I), m + n is an integer of at least 3. In certain embodiments of Formula (I), m + n is an integer of at least 10 (or at least 15). In certain embodiments of Formula (I), m + n is an integer of up to 250 (or up to 200, or up to 175, or up to 150, or up to 125, or up to 50, or up to 25).

In certain embodiments of Formula (I), m ÷ (m + n) is at least 0.50 (or at least 0.70, or at least 0.90). In certain embodiments of Formula (I), m ÷ (m + n) is up to 1.0.

In certain embodiments of Formula (I), the cyclic siloxane compound of the present disclosure has a (number average) molecular weight of at least 1000 Daltons. In certain embodiments, the cyclic siloxane compound of the present disclosure has a (number average) molecular weight of up to 75,000 Daltons.

Cyclic siloxane compounds of the present disclosure can be made using well-known techniques, as exemplified in the Examples Section. For example, cyclic siloxane compounds described herein can be prepared by a precious-metal (platinum, ruthenium, rhodium, etc.) catalyzed hydrosilation or hydrosilylation addition reaction of alkene-containing moieties with silicon-hydride containing cyclic siloxanes.

### Silsesquioxane Polymers

The silsesquioxane (SSQ) polymers of the compositions of the present disclosure display excellent water repellent properties when combined with one or more polycarbodiimides and applied to a substrate, particularly a fibrous substrate. The unique structure of the silsesquioxane polymers allows the hydrocarbon chains to co-crystallize (as shown in FIG. 1), which is believed to contribute to the water repellent properties.

The silsesquioxane polymers of the present disclosure also possess shelf stability. In this context, the polymers are completely soluble in heptane, methyl ethyl ketone, ethyl acetate, toluene, xylene, or a combination thereof, for at least 6 months, or at least 12 months.

In one embodiment, a silsesquioxane polymer is provided that is solid at 25°C and includes a three-dimensional network of Formula (II): 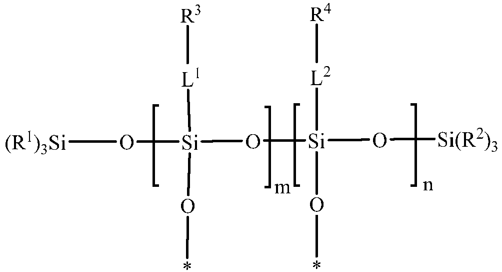 wherein this structure indicates the building blocks of the polymer, and each oxygen atom at an asterisk (*) is bonded to another Si atom within the three-dimensional network of the polymer. In typical polymers, the -L¹-R³-containing repeat units and the -L²-R⁴-containing units are randomly distributed in the polymers.

In Formula (II), each R¹ and R² is independently a (C1-C4)alkyl (e.g., a methyl group). In certain embodiments, each R¹ and R² is a methyl group.

In Formula (II), each L¹ and L² is independently a single bond, an alkylene, or an alkylene bonded to a group selected from oxy, thio, carbonyl, -NH-, and combinations thereof (e.g., carbonyloxy groups (-C(O)-O-) or carbonylamino groups (-(CO)-NH-)). Typically, in each of L¹ and L² there is only one of such group or combination thereof (e.g., only one oxy, thio, carbonyl, -NH-, carbonyloxy, or carbonylamino).

In certain embodiments of Formula (II), each L¹ is a single bond. In certain embodiments, at least a portion of the L¹ groups are single bonds, and at least a portion of the L¹ groups are an alkylene bonded to a group selected from oxy, thio, carbonyl, -NH-, and combinations thereof.

In certain embodiments of Formula (II), each L² is a single bond. In certain embodiments. at least a portion of the L² groups are an alkylene bonded to a group selected from oxy, thio, carbonyl, -NH-, and combinations thereof.

In Formula (II), each R³ is independently a linear (C14-C100)alkyl. In certain embodiments, each R³ is independently a linear (C14-C60)alkyl. In certain embodiments, each R³ is independently a linear (C16-C60)alkyl. In certain embodiments, each R³ is independently a linear (C18-C30)alkyl.

In Formula (II), each R⁴ is independently a (C1-C30)alkyl, a (C2-C30)heteroalkyl having at least one oxygen, sulfur, or -NH- group (in certain embodiments, multiples of such hetero groups are included), or a (C1-C30)alkyl substituted with a fluoro, thiol, isocyanato, cyanato, hydroxyl, glycidoxy, or epoxy group. Such groups may be nonreactive or reactive to allow, for example, bonding to a substrate.

In certain embodiments of Formula (II), each R⁴ is independently a (C1-C30)alkyl.

In certain embodiments of Formula (II), each R⁴ is independently a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group.

In certain embodiments of Formula (II), at least a portion of the R⁴ groups are independently a (C1-C30)alkyl, and at least a portion of the R⁴ groups are independently a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group.

In Formula (II), L¹, L², and R⁴ are selected such that each Si atom is directly bonded to an alkylene or an alkyl.

In Formula (II), m is an integer of at least 2.

In Formula (II), n is an integer of 0 or above. In certain embodiments, n = 0.

In Formula (II), m + n is an integer of at least 3. In certain embodiments, m + n is an integer of at least 25 (or at least 35). In certain embodiments, m + n is an integer of up to 600 (or up to 500, or up to 400, or up to 300, or up to 200, or up to 100, or up to 50).

In certain embodiments of Formula (II), m ÷ (m + n) is at least 0.50 (or at least 0.70, or at least 0.90). In certain embodiments of Formula (II), m ÷ (m + n) is up to 1.0.

In certain embodiments of Formula (II), the silsesquioxane polymer of the present disclosure has a (weight average) molecular weight of at least 1000 Daltons (i.e., grams/mole), at least 2000 Daltons, or at least 10,000 Daltons. In certain embodiments, the silsesquioxane polymer of the present disclosure has a (weight average) molecular weight of up to 200,000 Daltons, up to 100,000 Daltons, or up to 20,000 Daltons.

SSQ polymers of the present disclosure can be made using well-known techniques, as exemplified in the Examples Section. For example, SSQ polymers can be generally prepared by acid- or base-catalyzed hydrolysis and condensation of silanes that include at least three hydrolyzable groups, such as trialkoxysilane, trichlorosilanes, tribromosilanes, triiodosilanes, triacetoxysilanes, etc. Generally, the hydrolysis leads to the formation of reactive silanol groups, which condense together to form silicon-oxygen-silicon bonds. The residual silanol groups can further be capped with a capping agent (silane with one hydrolyzable group), such as trimethylethoxysilane, trimethylchlorosilane, trimethylchlorosilane, etc.

### Polycarbodiimides

Polycarbodiimide compounds (PCDs) include one or more groups of the formula (N=C=N)).

In certain embodiments, the one or more polycarbodiimide compounds are derived from a carbodiimidization reaction, in one or more steps, of components comprising:
(i) at least one isocyanate-reactive (i.e., functionalized) oligomer comprising 2 to 20 repeating units;
(ii) at least one polyisocyanate; and
(iii) optionally at least one additional isocyanate-reactive compound.

The isocyanate-reactive oligomer is made by the radical-initiated reaction of at least one (meth)acrylate monomer in the presence of a chain transfer agent (e.g., a mercaptan). In certain embodiments, the at least one (meth)acrylate monomer comprises at least one hydrocarbon group (in certain embodiments, a linear or branched hydrocarbon group, and in certain embodiments, a linear hydrocarbon group) having from 1 to 60 carbon atoms (in some embodiments, from 4 to 60 carbon atoms, or from 12 to 60 carbon atoms, or from 12 to 50 carbon atoms, or from 12 to 40 carbon atoms, or from 16 to 40 carbon atoms). In certain embodiments, the at least one (meth)acrylate monomer comprises at least one hydrocarbon group (in certain embodiments, a linear or branched hydrocarbon group, and in certain embodiments, a linear hydrocarbon group) having from 1 to 60 carbon atoms (in some embodiments, from 4 to 60 carbon atoms, or from 12 to 60 carbon atoms, or from 12 to 50 carbon atoms, or from 12 to 40 carbon atoms, or from 16 to 40 carbon atoms), and at least one isocyanate-derived group.

In certain embodiments, the resultant oligomer (or polycarbodiimide) includes at least 70 wt-%, or at least 80 wt-%, or at least 85 wt-%, or at least 90 wt-%, or all, of the repeating units with at least one hydrocarbon group having at least 16 carbon atoms (and in certain embodiments, up to 60 carbon atoms, or up to 30 carbon atoms), based on the total weight of the oligomer (or polycarbodiimide).

Examples of suitable (meth)acrylate monomers include octadecyl acrylate, octadecylmethacrylate, behenylacrylate, behenylmethacrylate, 2-tetradecyloctadecylacrylate, 2-tetradecyloctadecylmethacrylate, and the like. Other examples of suitable (meth)acrylate monomers include the reaction product of stearylisocyanate with 2-hydroxyethyl(meth)acrylate (for example, C₁₈H₃₇-NHC(O)O-CH₂CH₂-OC(O)CH=CH₂), the reaction product of stearyl isocyanate with 3-hydroxypropyl (meth)acrylate, the reaction product of stearylisocynate with 4-hydroxybutyl (meth)acrylate, the reaction product of isocyanatoethyl(meth)acrylate with stearyl alcohol, the reaction product of isocyanatoethyl(meth)acrylate with behenylalcohol, the reaction product of isocyanatoethyl(meth)acrylate with 2-tetradecyloctadecanol, the reaction product of 2,4'-toluene diisocyanate (TDI) with stearyl alcohol and 2-hydroxyethyl (meth)acrylate, the reaction product of TDI with stearyl alcohol and 3-hydroxypropyl (meth)acrylate, the reaction product of TDI with stearyl alcohol and 4-hydroxybutyl (meth)acrylate, the reaction product of TDI with behenylalcohol and 2-hydroxyethyl (meth)acrylate, and the like.

The oligomerization is typically carried out in the presence of a chain transfer agent. Examples of mono- or di-functional hydroxyl- or amino-functionalized chain transfer agents can be used, in order to prepare mono- or di-functionalized oligomers, respectively. Preferred chain transfer agents are mercaptans, which may be functionalized or non-functionalized. Examples of monofunctional chain transfer agents (i.e., mercaptans) include 2-mercaptoethanol, 3-mercapto-2-butanol, 3-mercapto-2-propanol, 3-mercapto-1-propanol, and 2-mercapto-ethylamine. A particularly suitable monofunctional chain transfer agents is 2-mercaptoethanol. Examples of difunctional chain transfer agents include those having two hydroxyl or amino groups or one hydroxyl and one amino group. A suitable example of a difunctional chain transfer agent is 3-mercapto-1,2-propanediol (thioglycerol). Examples of non-functionalized mercaptans include octylmercaptan, dodecylmercaptan, octadecylmercaptopropionate, and octadecylmercaptan.

In order to prepare the functionalized oligomers, a free-radical initiator may be used to initiate the oligomerization. Free-radical initiators include those known in the art and include, in particular, azo compounds such as 2,2'-azobis(2-methylbutyronitrile), 2,2'-azobisisobutyronitrile (AIBN) and 2,2'-azobis(2-cyanopentane), and the like, hydroperoxides such as cumene, t-butyl- and t-amyl-hydroperoxide, and the like, peroxyesters such as t-butylperbenzoate, di-t-butylperoxyphtalate, and the like, and diacylperoxides such as benzoyl peroxide, lauroyl peroxide, and the like.

The polyisocyanates suitable for use in making polycarbodiimides can be di-, tri-, or higher functional isocyanates. Polyisocyanates may also include polymeric compounds with 4 or more isocyanates or nonpolymeric compounds with 4 or more isocyanates. The reaction product of such condensation reaction is typically a mixture of isocyanate-containing oligomers.

Examples of diisocyanates include 4,4'-methylenediphenylenediisocyanate (MDI), 2,4-toluenediisocyanate, 2,6-toluene diisocyanate, o, m, and p-xylylene diisocyanate, 4,4'-diisocyanatodiphenylether, 3,3'-dichloro-4,4'-diisocyanatodiphenylmethane, 4,4'-diphenyldiisocyanate, 4,4'-diisocyanatodibenzyl, 3,3'-dimethoxy-4,4'-diisocyanatodiphenyl, 3,3'-dimethyl-4,4'-diisocyanatodiphenyl, 2,2'-dichloro-5,5'-dimethoxy-4,4'-diisocyanato diphenyl, 1,3-diisocyanatobenzene, 1,2-naphthylene diisocyanate, 4-chloro-1,2-naphthylene diisocyanate, 1,3-naphthylene diisocyanate, and 1,8-dinitro-2,7-naphthylene diisocyanate; alicyclic diisocyanates such as 3-isocyanatomethyl-3,5,5-trimethylcyclohexylisocyanate; 3-isocyanatomethyl-3,5,5-trimethylcyclohexylisocyanate; aliphatic diisocyanates such as 1,6-hexamethylenediisocyanate, 2,2,4-trimethyl-1,6-hexamethylenediisocyanate, and 1,2-ethylenediisocyanate; cyclic diisocyanates such as isophorone diisocyanate (IPDI) and dicyclohexylmethane-4,4'-diisocyanate. Examples of triisocyanates include aliphatic triisocyanates such as 1,3,6-hexamethylenetriisocyanate and aromatic triisocyanates such as tri-(4-isocyanatophenyl)-methane. Examples of polymeric isocyanates include polymethylenepolyphenylisocyanate (PAPI). Particularly suitable isocyanates are aromatic isocyanates, including MDI and PAPI. Particularly suitable diisocyanates are aromatic isocyanates, including MDI.

The additional isocyanate-reactive compounds suitable for use in making polycarbodiimides are typically compounds containing one or two isocyanate-reactive groups and include mono- and di-, tri-, and poly-functional alcohols, thiols, and amines. The additional isocyanate-reactive compounds are non-fluorinated. A single compound or a mixture of different compounds may be used.

Examples of such additional isonate-reactive compounds include alkanols, such as methanol, ethanol, n-propylalcohol, isopropyl alcohol, n-butyl alcohol, isobutyl alcohol, t-butyl alcohol, n-amyl alcohol, t-amyl alcohol, 2-ethylhexanol, glycidol, (iso)stearyl alcohol, behenyl alcohol, branched long chain alkanols, such as Guerbet alcohols (2-alkyl alkanols having C-14 to C-32 alkyl chains, available from Sasol,Germany), alcohols comprising poly(oyalkylene) groups, such as methyl or ethyl ether of polyethyleneglycol, hydroxyl-terminated methyl or ethyl ether of random or block copolymer of ethyleneoxide and/or propyleneoxide and polysiloxane (e.g., polydimethylsiloxane) group-containing alcohols. Further examples include diols, such as 1,4-butanediol, 1,6-hexanediol, 1-10-decanediol, 4,4'-isopropylidene diphenol (Bisphenol A), glycerol, pentaerythritol, dipentaerythritol; polyester diols, such as polycaprolactone diol, fatty acid dimer diols and poly(oxy)alkylenediols with an oxyalkylene group having 2 to 4 carbon atoms, such as - OCH₂ CH₂-, -O(CH₂)₄-, -OCH₂ CH₂ CH₂-, -OCH(CH₃)CH₂-, and -OCH(CH₃)CH(CH₃)-(the oxyalkylene units in said poly(oxyalkylene) may be the same, as in polypropyleneglycol, or present as a mixture), and ester diols, such as glycerol monostearate and polysiloxane-containing (e.g., polydimethylsiloxane-containing) diols.

Further additional isocyanate-reactive compounds include amino-containing compounds, such as octadecylamine, di(octadecyl)amine, 1,6-hexamethylenediamine, amino-terminated polyethyleneoxide or propyleneoxide or copolymers thereof, amino-terminated methyl or ethylethers of polyethyleneoxide or polypropyleneoxide or copolymers thereof and amino group-terminated polysiloxanes, for example, polydimethylsiloxanes.

Still further additional isocyanate-reactive compounds include thiol-containing compounds, such as octadecylmercaptan, dodecylmercaptan, octadecylmercaptopropionate, 1,4-butanedithiol, and 1,6-hexanedithiol.

Examples of suitable such polycarbodiimide compounds, and the preparation thereof, are described in International Publication No. WO2016/130352, which published on August 18, 2016, and U.S. Pat. No. 8,440,779 (Audenaert et al.).

For example, a suitable polycarbodiimide is PCD-5 described in U.S. Pat. No. 8,440,779 (Audenaert et al.), which is a reaction product of 4 moles of 4,4'-methylene diphenyl diisocyanate and 4 moles of the reaction product of octadecyl acrylate and HSCH₂CH₂OH.

### Treating Compositions

Treating compositions of the present disclosure are particularly useful for treating substrates such as fibrous substrates. Thus, the present disclosure provides treating compositions, particularly aqueous treating compositions, treated substrates, particularly treated fibrous substrates, and treating methods.

In certain embodiments, such compositions are fluorine-free. Herein, a "fluorine-free" composition means that a composition includes less than 1 weight percent (1 wt-%) fluorine in a composition based on solids, whether in a concentrate or ready-to-use treating composition. In certain embodiments, a "fluorine-free" composition means that a composition includes less than 0.5 wt%, or less than 0.1 wt%, or less than 0.01 wt-%, fluorine. The fluorine may be in the form of organic or inorganic fluorine-containing compounds.

Treating compositions of the present disclosure are useful for treating a substrate to enhance the substrate's water repellency. As used herein, a substrate is water repellent if it demonstrates a minimum initial spray rating of at least 80, as determined by the Spray Rating Test described in the Examples Section. In certain embodiments, the initial spray rating is at least 80, at least 90, or at least 100, as determined by the Spray Rating Test described in the Examples Section.

In certain embodiments, the substrates are treated such that they become durably water repellent. As used herein, a fibrous substrate is durably water repellent if it demonstrates a spray rating of at least 70 after 5 launderings, when treated with 1% solids, preferably 0.6% solids, on fibrous substrate, using a treating composition of the present disclosure, as determined by the Spray Rating Test with launderings (and optional ironing), as described in the Examples Section. In certain embodiments, the spray rating is at least 70 after 5 launderings, or at least 80 after 5 launderings, when treated with 1% solids, preferably 0.6% solids, on fibrous substrate, using a treating composition of the present disclosure, as determined by the Spray Rating Test with launderings (and optional ironing), as described in the Examples Section.

Typically, an amount of treating composition is used to obtain a desired initial spray rating level. In certain embodiments, the amount of treating composition is at least 0.1 weight percent (wt-%), or at least 0.2 wt-%, or at least 0.3 wt-%, or at least 0.4 wt-%, or at least 0.5 wt-%, or at least 0.6 wt-%, SOF (solids on fibrous substrate, e.g., fabric). In certain embodiments, the amount of treating composition is up to 2 wt-%, or up to 1.5 wt-%, or up to 1 wt-% SOF (solids on fibrous substrate, e.g., fabric).

Exemplary fibrous substrates include textile, leather, carpet, paper, and fabrics (nonwoven, woven, or knitted). Suitable polymeric materials include, for example, polyester and nylon.

Aqueous treating compositions of the present disclosure may be in the form of a concentrate, which may include up to 80 weight percent (wt-%) water, based on the total weight of the concentrated treating composition. Alternatively, aqueous treating compositions of the present disclosure may be in the form of a ready-to-use formulation, which may include more than 80 wt-% water, or at least 85 wt-% water, or at least 90 wt-% water, or at least 95 wt-% water, or at least 98 wt-% water, based on the total weight of the ready-to-use treating composition. In certain embodiments, a ready-to-use aqueous treating composition of the present disclosure includes up to 99 wt-% water, based on the total weight of the ready-to-use treating composition.

The SSQs and/or cyclic siloxane compounds along with the PCDs of the present disclosure may be dispersed in water using a surfactant or mixture of surfactants in an amount sufficient to stabilize the dispersion. If the SSQs, cyclic siloxane compounds, and PCDs are made in solution in a solvent, they can be dispersed in water through vigorously mixing and homogenizing with the help of a surfactant or emulsifier and subsequent homogenization, for example, by a Manton Gaulin homogenizer or ultrasound homogenizer. An organic solvent-free dispersion can then be obtained by subsequent distillation of the solvent.

A typical dispersion will contain water in an amount of 70 to 20,000 parts by weight based on 100 parts by weight of SSQ and/or cyclic siloxane compound. In certain embodiments, the surfactant or mixture of surfactants is present in an amount of 1 to 25 parts by weight, or 5 to 15 parts by weight, based on 100 parts by weight of SSQ and/or cyclic siloxane compound.

Treating compositions of the present disclosure can include conventional cationic, nonionic, anionic, and/or zwitterionic (i.e., amphoteric) surfactants (i.e., emulsifiers). A mixture of surfactants may be used, e.g., containing nonionic and ionic surfactants. Suitable nonionic surfactants can have high or low HLB values, such as TERGITOL's, TWEEN's, and the like. Suitable cationic surfactants include mono- or bi-tail ammonium salts. Suitable anionic surfactants include sulfonic and carboxylic aliphatic compounds and their salts, such as sodium dodecylbenzene sulphonate (available from Rhodia, France), and the like. Suitable amphoteric surfactants include cocobetaines, sulphobetaines, amine-oxides, and the like. In certain embodiments, surfactants suitable for use in the treating compositions of the present disclosure are described in International Publication No. WO 2013/162704 (Coppens et al.).

Also, treating compositions of the present disclosure may include one or more organic solvents (e.g., a coalescing solvent or an anti-freeze solvent). For example, a coating composition of the present disclosure can include an organic solvent in addition to the water. Alternatively, one or more organic solvents may be used without water. Useful solvents for the coating compositions include those in which the compound is soluble at the level desired. Typically, such organic solvent includes toluene, heptane, methyl ethyl ketone, ethyl acetate, propylene glycol, and xylene. These solvents can be used alone or as mixtures thereof.

Any amount of the organic solvent can be used. For example, a coating composition can include up to 50 wt-% or even more of organic solvent (e.g., up to 99 wt-%). The solvent can be added to provide the desired viscosity to the coating composition. In some embodiments, no solvent or only low levels (e.g., up to 10 wt-%) of organic solvent is used in the coating composition.

A wide variety of other optional additives can be included in coating compositions of the present disclosure. Examples include surfactants (as discussed above), defoamers, air release additives, thixotropic agents, inorganic particles, organic particles, pigments, wetting agents, dispersing agents, surface additives, adhesion promoters, emulsifying agents, process aids, or stabilizers against one or more microorganisms, etc. Various combinations of such additives can be used if desired. The amount of such additive will depend on the application, and can be readily determined by one of skill in the art.

A coating composition typically has a viscosity appropriate to the application conditions and method. For example, a material to be brush or roller coated would likely be preferred to have a higher viscosity than a dip coating composition. Typically, a coating composition includes at least 5 wt-%, of the silicon-containing and PCD compounds, based on the total weight of the coating composition. A coating composition often includes up to 80 wt-%, of the silicon-containing and PCD compounds, based on the total weight of the coating composition.

A wide variety of coating methods can be used to apply a composition of the present disclosure, such as brushing, spraying, dipping, rolling, spreading, and the like. Other coating methods can also be used, particularly if no solvent is included in the coating composition. Such methods include knife coating, gravure coating, die coating, and extrusion coating, for example.

A coating composition of the present disclosure can be applied in a continuous or patterned layer. Such layer can be disposed on at least a portion of at least one surface of the substrate. If the composition includes an organic solvent, the coated composition can be exposed to conditions that allow the organic solvent to evaporate from the composition.

### EXAMPLES

These Examples are merely for illustrative purposes and are not meant to be overly limiting on the scope of the appended claims. Notwithstanding that the numerical ranges and parameters setting forth the broad scope of the present disclosure are approximations, the numerical values set forth in the specific examples are reported as precisely as possible. Any numerical value, however, inherently contains certain errors necessarily resulting from the standard deviation found in their respective testing measurements. At the very least, and not as an attempt to limit the application of the doctrine of equivalents to the scope of the claims, each numerical parameter should at least be construed in light of the number of reported significant digits and by applying ordinary rounding techniques.

Unless otherwise noted, all parts, percentages, ratios, etc. in the examples are by weight. Unless otherwise specified, all reagents used in the examples were obtained, or are available, from general chemical suppliers such as, for example, Sigma Aldrich Company, Saint Louis, Missouri, or may be synthesized by conventional methods.

**Materials**

| **Description** |
|---|
| Octadecyltrimethoxysilane, having a melting point of 13-17°C, a boiling point of 170°C at 0.1 millimeter Hg, and a molecular weight of 375 grams/mole, available under the product code SIO6645.0 from Gelest, Incorporated, Morrisville, PA. |
| Trimethylethoxysilane, >95%, having a freezing point of -83°C, a boiling point of 75°C, and a molecular weight of 118 grams/mole, available under the product code SIT8515.0 from Gelest, Incorporated, Morrisville, PA. |
| Triethoxysilane, 95-100%, having a melting point of -170°C, a boiling point of 131°C, and a molecular weight of 164 grams/mole, available under the product code SIT8185.0 from Gelest, Incorporated, Morrisville, PA. |
| 2,4,6,8-Tetramethyl cyclotetrasiloxane, having a molecular weight of 240 grams/mole, a melting point of -69°C, and a boiling point of 134°C, available under product code SIT7530.1 from Gelest, Incorporated, Morrisville, PA. |
| Karstedt's Catalyst: a platinum-divinyltetramethyldisiloxane complex in xylene, containing between 2.1 and 2.4 weight percent (wt-%) platinum concentration (concentration of pure platinum metal), available under the product code SIP6831.2 from Gelest, Morrisville, PA. |
| ALPHAPLUS 1-octadecene, alpha olefins containing about 90-100 wt-% of olefins having a carbon number of C18 and having an average molecular weight of 252 grams/mole, available under the trade designation ALPHAPLUS 1-OCTADECENE from Chevron Phillips Chemical Company LP, The Woodlands, TX. |
| ALPHAPLUS C26-28, alpha olefins containing about 58 wt-% of olefins having a carbon number of C26 and about 40 weight% of olefins having a carbon number of C28, and having an average molecular weight of 378 grams/mole, available under the trade designation ALPHAPLUS C26-28 from Chevron Phillips Chemical Company LP, The Woodlands, TX. |
| ALPHAPLUS C30+HA, a mixture of alpha olefins containing at least 95.5 wt-% of olefins having a carbon number of C30 or more, with an average molecular weight of 485 grams/mole, available under the trade designation ALPHAPLUS C30+HA from Chevron Phillips Chemical Company LP, The Woodlands, TX. |
| ETHOQUAD C-12, quarternized coco amine ethoxylate emulsifier (75-78% solids), available from Akzo Nobel, Stenungsund, Sweden. |
| TERGITOL TMN-6, trimethyl nonane polyethylene nonionic surfactant, 90% active in water, available from Dow Chemical Company, Midland, MI |
| TERGITOL 15-S-30, alkyl polyoxyethylene nonionic surfactant, available from Dow Chemical Company, Midland, MI |
| Taslan Dobby woven nylon fabric (NTD), having a basis weight of 115 g/m2. The nylon fabric is characterized by the Chinese manufacturer as 70D*160D/166T*83T, dyed and prepared for finishing. |
| Poly Pongee woven polyester fabric (PPP), having a basis weight of 84 g/m2. The polyester fabric is characterized by the Chinese manufacturer as 75D*75D/145T*90T, dyed and prepared for finishing. |

### Test Methods

### Gel Permeation Chromatography (GPC)

Molecular weights and polydispersity were determined at 23°C by gel permeation chromatography (GPC) using a Model AGILENT 1100 Series LC SYSTEM (Agilent Technologies, Santa Clara, CA) equipped with a JORDI Gel DVB (Divinyl Benzene) MB-LS (Mixed Bed-Light Scattering) 250 millimeter (length) x 10 millimeter I.D. (Inside Diameter) column set, in combination with a Model WYATT REX DIFFERENTIAL REFRACTIVE INDEX DETECTOR and a Model WYATT HELEOS II 18 ANGLE STATIC LIGHT SCATTERING DETECTOR (Wyatt Technology Corporation, Santa Barbara, CA). Sample solutions were prepared by adding 10 milliliters of tetrahydrofuran (THF) to a sample weighing between approximately 50 and 100 milligrams, and mixing for at least 14 hours followed by filtering through a 0.2 micrometer polytetrafluoroethylene syringe filter. The injection volume was 60 microliters and the THF eluent flow rate was 1.0 milliliter/minute. Duplicate solutions were run. The results were analyzed using Wyatt ASTRA software, Version 5.3. Weight and Number Average Molecular Weights (Mw and Mn) were reported in grams/mole, along with polydispersity D (Mw/Mn).

### Contact Angle

All of the materials were coated out of toluene solution at 5 wt-% solids using #6 Mayer rod onto the primed side of 0.002 inch (0.05 millimeter) thick polyester film (Mitsubishi HOSTAPHAN 3SAB available from Mitsubishi Polyester Film, Incorporated, Greer, SC). The coated films were dried at 80°C for 2 minutes in a forced air oven. Static contact angle measurements were made as soon as the samples had cooled to room temperature (20-25°C) using a Model S/N VCA OPTIMA Instrument (from AST Product Incorporated, Billerica, MA). The contact angles were measured automatically with AutoFAST IMAGING SOFTWARE. A single measurement was made for each sample. A larger contact angle value indicates the material being evaluated has a greater degree of hydrophobicity.

### Spray Rating (SR)

The spray rating of a treated substrate is a value indicative of the dynamic repellency of the treated substrate to water that impinges on the treated substrate. The repellency was measured by Test Method 22-1996, published in the 2001 Technical Manual of the American Association of Textile Chemists and Colorists (AATCC), and is expressed in terms of a 'spray rating' of the tested substrate. The spray rating was obtained by spraying 250 milliliters water on the substrate from a height of 15 centimeters. The wetting pattern was visually rated using a 0 to 100 scale, where 0 means complete wetting and 100 means no wetting at all. Spray rating was measured initially and after the fabric was laundered 5 or 20 times (designated as 5L or 20L respectively).

The laundering procedure consisted of placing a 400 - 900 cm² sheet of treated substrate in a washing machine (A Kenmore Elite washing machine) along with ballast sample (1.9 kilograms (kg) of 8-ounce fabric). A commercial detergent ("TIDE" available from Proctor & Gamble, US, 38 grams (g)) was added. The substrate and ballast load were washed using a short wash cycle at 40°C, followed by a rinse cycle and centrifuging. The sample was not dried between repeat cycles. After the required number of cycles the textile samples were dried in a Miele T-356 tumble drier, setting 'high.

In certain test methods, drying may or may not be done between launderings.

### Treatment Procedure via "Padding" Process

The treatments were applied onto the fabric substrates, by immersing the substrates in the treatment dispersion and agitating until the substrate was saturated. The saturated substrate was then run through a padder/roller to remove excess of the dispersion and to obtain a certain % Wet Pick Up (WPU) (100% WPU means that after this process the substrate absorbed 100% of its own weight of the treatment dispersion before drying). Samples were then dried and cured at 150°C-170°C for about 1-5 minutes.

### Preparative Examples

### Preparation of C26-28 Adduct of Triethoxysilane

ALPHAPLUS C26-28, 126 grams, was added at room temperature to a 500-milliliter round bottom flask equipped with a condenser and heated at 90°C for one hour. Next, a mixture of 60 grams triethoxysilane and 0.121 gram of Karstedt's Catalyst was added to the flask at 90°C followed by stirring for twelve hours. The reaction mixture was then vacuum stripped at 90°C for one hour to give 165 grams (93% yield) of an off-white solid product which was the C26-28 adduct of triethoxysilane.

### Preparation of C18-SSQ

The following were mixed together at room temperature in a 500-milliliter round bottom flask equipped with a condenser: 100 grams of octadecyl-trimethoxysilane, 100 grams of deionized (DI) water containing 1 part hydrochloric acid per 1000 parts water, and 200 grams of isopropyl alcohol. The mixture was heated at 70°C and stirred with a magnet for two hours followed by the addition of 20 grams of trimethylethoxysilane. Next, the reaction mixture was stirred for three hours to give a white precipitate. The white precipitate was collected by filtering the mixture through a 240 millimeter diameter, GRADE 1(11 micrometer),WHATMAN QUALITATIVE FILTER PAPER then washing the precipitate with 500 milliliters of distilled water followed by drying using a vacuum pump at 70°C for two hours to give 96.0 grams (96% yield) of a white solid, octadecyl silsesquioxane polymer, having a melting point of 45°C and designated herein as C18-SSQ (Formula (II), L¹ = L² = single bond; R¹ = R² = methyl; R³ = R⁴ = C18 alkyl; m = 18; n= 0). The contact angle measured and found to be 105.5 degrees. The product was also analyzed by gel permeation chromatography (GPC) to obtain the results shown in Table 1.

**Table 1**

| Mₙ (grams/mole) | M_{w} (grams/mole) | D |
|---|---|---|
| 5,050 | 5,720 | 1.13 |

### Preparation of C26-28-SSQ

C26-28 silsesquioxane polymer was prepared in the same manner as C18-SSQ with the following modification: C26-28 Adduct of Triethoxysilane, 100 grams, prepared as described above, was used in place of octadecyl-trimethoxysilane to provide 97.0 grams (97% yield) of a white solid, C26-28 silsesquioxane polymer, designated herein as C26-28-SSQ_(Formula (II), L¹ = L² = single bond; R¹ = R² = methyl; R³ = R⁴ = C26-C28 alkyl (mixture); m = 15; n = 0). The contact angle measured and found to be 105.0 degrees.

### Preparation of C18-SSQ Emulsion

Thirty (30) grams of C18-SSQ was dissolved in 70 grams of methyl isobutyl ketone (MIBK) at 65°C in a 500-milliliter three-neck round-bottomed flask. To this was added a solution containing 130 grams of DI water, 1.2 grams ETHOQUAD C-12, 1.8 grams TERGITOL TMN-6, and 0.9 grams of TERGITOL 15-S-30, also at 65°C. The mixture was vigorously stirred for 15 minutes at 65°C, and then was then homogenized by passing the mixture two times through a homogenizer (Model HC8000, Microfluidics Corp., Westwood, MA) at 65°C. MIBK was then removed by vacuum distillation at 40°C. The solid content of the obtained C18-SSQ emulsion was 15.0%.

### Preparation of C26-28-SSQ Emulsion

Thirty (30) grams of C26-28-SSQ were dissolved in 70 grams of methyl isobutyl ketone (MIBK) at 65°C in a 500-milliliter three-neck round-bottomed flask. To this was added a solution containing 130 grams of DI water, 1.2 grams ETHOQUAD C-12, 1.8 grams TERGITOL TMN-6, and 0.9 grams of TERGITOL 15-S-30, also at 65°C. The mixture was vigorously stirred for 15 minutes at 65°C, and then was then homogenized by passing the mixture two times through a homogenizer (Model HC8000, Microfluidics Corp., Westwood, MA) at 65°C. MIBK was then removed by vacuum distillation at 40°C. The solid content of the obtained C18-SSQ emulsion was 19.2%.

### Preparation of D4-C18 Cyclic Siloxane

ALPHAPLUS 1-octadecene, 101 grams, was added at room temperature to a 500 milliliter round bottom flask equipped with a condenser. Next, a mixture of 24 grams of 2,4,6,8-tetramethyl cyclotetrasiloxane and 0.024 gram of Karstedt's catalyst solution was added to the flask at room temperature followed by heating at 80°C and stirring for 6-8 hours. 2,4,6,8-Tetramethyl-tetra-octadecyl cyclotetrasiloxane was obtained as white solid (125 grams, 99% yield) (Formula (I) wherein L¹ = L² = single bond; R¹ = R² = methyl; R³ = R⁴ = C18 alkyl; m = 4; n = 0).

### Preparation of D4-C26-28 Cyclic Siloxane

ALPHPLUS C26-28, 151.2 grams, was added at room temperature to a 500 milliliter round bottom flask equipped with a condenser followed by heating at 90°C for one hour. Next, mixture of 24 grams of 2,4,6,8-tetramethyl cyclotetrasiloxane and 0.048 gram of Karstedt's catalyst solution was added to the flask at 100°C followed by stirring for 6-8 hours. 2,4,6,8-Tetramethyl-tetra-C26-28 cyclotetrasiloxane was obtained as white solid (174 grams, 99% yield) (Formula (I) wherein L¹ = L² = single bond; R¹ = R² = methyl; R³ = R⁴ = C26-C28 alkyl; m = 4; n = 0).

### Preparation of D4-C30 Cyclic Siloxane

ALPHAPLUS C30+HA, 194 grams, was added at room temperature to a 500 milliliter round bottom flask equipped with a condenser followed by heating at 100°C for one hour. Next, a mixture of 24 grams of 2,4,6,8-tetramethyl cyclotetrasiloxane and 0.048 gram of Karstedt's catalyst solution was added to the flask at 100°C followed by stirring for 6-8 hours. 2,4,6,8-Tetramethyl-tetra-C30 cyclotetrasiloxane was obtained as white solid (218 grams, 99% yield) (Formula (I) wherein L¹ = L² = single bond; R¹ = R² = methyl; R³ = R⁴ = C30+ alkyl; m = 4; n = 0).

### Preparation of D4-C18 Cyclic Siloxane Emulsion

Thirty (30) grams of D4-C18 cyclic siloxane were dissolved in 45 grams of ethyl acetate at 65°C in a 500-milliliter three-neck round-bottomed flask. To this was added a solution containing 130 grams of DI water, 0.75 grams ETHOQUAD C-12, 1.8 grams TERGITOL TMN-6, and 0.9 grams of TERGITOL 15-S-30, also at 65°C. The mixture was vigorously stirred for 15 minutes at 65°C, and then was then homogenized by passing the mixture two times through a homogenizer (Model HC8000, Microfluidics Corp., Westwood, MA) at 65°C. Ethyl acetate was then removed by vacuum distillation at 40°C. The solid content of the obtained D4-C18 cyclic siloxane emulsion was 20.2%.

### Preparation of D4-C26-28 Cyclic Siloxane Emulsion

Thirty (30) grams of D4-C26-28 cyclic siloxane were dissolved in 45 grams of ethyl acetate at 65°C in a 500-milliliter three-neck round-bottomed flask. To this was added a solution containing 130 grams of DI water, 0.75 grams ETHOQUAD C-12, 1.8 grams TERGITOL TMN-6, and 0.9 grams of TERGITOL 15-S-30, also at 65°C. The mixture was vigorously stirred for 15 minutes at 65°C, and then was then homogenized by passing the mixture two times through a homogenizer (Model HC8000, Microfluidics Corp., Westwood, MA) at 65°C. Ethyl acetate was then removed by vacuum distillation at 40°C. The solid content of the obtained D4-C26-28 cyclic siloxane emulsion was 18.9%.

### Preparation of D4-C30 Cyclic Siloxane Emulsion

Thirty (30) grams of D4-C30 cyclic siloxane were dissolved in 45 grams of ethyl acetate at 65°C in a 500-milliliter three-neck round-bottomed flask. To this was added a solution containing 130 grams of DI water, 0.75 grams ETHOQUAD C-12, 1.8 grams TERGITOL TMN-6, and 0.9 grams of TERGITOL 15-S-30, also at 65°C. The mixture was vigorously stirred for 15 minutes at 65°C, and then was then homogenized by passing the mixture two times through a homogenizer (Model HC8000, Microfluidics Corp., Westwood, MA) at 65°C. Ethyl acetate was then removed by vacuum distillation at 40°C. The solid content of the obtained D4-C30 cyclic siloxane emulsion was 20.5%.

### Preparation of PCD-A Emulsion

Polycarbodiimide prepared as per U.S. Patent No. 8,440,779 as "PCD-5" by reacting (ODA)₄ oligomer and isostearyl alcohol followed by carbodiimidization and emulsification. ODA is an octadecyl acrylate monomer. The solid content of the PCD-A emulsion was 25.8%.

### Preparation of PCD-B Emulsion

Polycarbodiimide prepared and emulsified as per Example 2 in International Patent Publication No. WO 2016/130352. The solid content of the PCD-B emulsion was 25.0%

### Examples

### Example 1 (Mixing C18-SSQ and PCD-A emulsions)

C18-SSQ emulsion (1.90 grams) and 4.43 grams of PCD-A emulsion were each added separately into 93.67 grams of DI water and then mixed well before fabric immersion and treatment per the "Treatment Procedure via "Padding" Process." The mass ratio of SOF was varied by adjusting the amount of the C18-SSQ and PCD-A emulsions as indicated Tables 2 and 3 (Example 1a and Example 1b). Treatments were applied to both nylon (NTD) and polyester (PPP) fabric substrates.

### Example 2 (Mixing C18-SSQ and PCD-B emulsions)

C18-SSQ emulsion (1.91 grams) and 4.57 grams of PCD-B emulsion were each added separately into 93.66 grams of DI water and then mixed well before fabric immersion and treatment per the "Treatment Procedure via "Padding" Process." The mass ratio of SOF was varied by adjusting the amount of the C18-SSQ and PCD-B emulsions as indicated Tables 2 and 3 (Example 2a). Treatments were applied to both nylon (NTD) and polyester (PPP) fabric substrates.

### Example 3 (Mixing C26-28-SSQ and PCD-A emulsions)

C26-28-SSQ emulsion (1.49 grams) and 4.43 grams of PCD-A emulsion were each added separately into 94.08 grams of DI water and then mixed well before fabric immersion and treatment per the "Treatment Procedure via "Padding" Process." The mass ratio of SOF was varied by adjusting the amount of the C26-28-SSQ and PCD-A emulsions as indicated Tables 2 and 3 (Example 3a and Example 3b). Treatments were applied to both nylon (NTD) and polyester (PPP) fabric substrates.

### Example 4 (Mixing C26-28-SSQ and PCD-B emulsions)

C26-28-SSQ emulsion (5.96 grams) and 1.15 grams of PCD-B emulsion were each added separately into 92.89 grams of DI water and then mixed well before fabric immersion and treatment per the "Treatment Procedure via "Padding" Process." Treatments were applied to both nylon and polyester fabric substrates. Treatments were applied to both nylon (NTD) and polyester (PPP) fabric substrates.

The treated fabrics of Examples 1-4 were tested for their dynamic water repellent properties using the Spray Rating (SR) test as described herein. Spray rating was measured initially and after laundering. C18-SSQ emulsion alone and the PCD-A emulsion alone were also tested for comparison (CE1, CE2 and CE3). The Spray Rating data are reported in Tables 2 and 3.

**Table 2 - Treatments on PPP Polyester fabric (73% WPU)**

| Example | Composition (emulsion type) | % Solids | Amount of emulsion (grams) | % SOF | Spray Rating (initial) | Spray Rating (5L) | Spray Rating (20L) |
|---|---|---|---|---|---|---|---|
| 1 | C18-SSQ | 15.0 | 1.90 | 0.2 | 100 | 95 | 80 |
| | PCD-A | 25.8 | 4.43 | 0.8 | | | |
| 1a | C18-SSQ | 15.0 | 4.76 | 0.5 | 95 | 95 | 80 |
| | PCD-A | 25.8 | 2.77 | 0.5 | | | |
| 1b | C18-SSQ | 15.0 | 7.62 | 0.8 | 85 | 80 | 60 |
| | PCD-A | 25.8 | 1.11 | 0.2 | | | |
| 2 | C18-SSQ | 15.0 | 1.91 | 0.2 | 100 | 100 | 90 |
| | PCD-B | 25.0 | 4.57 | 0.8 | | | |
| 2a | C18-SSQ | 15.0 | 7.62 | 0.8 | 95 | 95 | 80 |
| | PCD-B | 25.0 | 1.15 | 0.2 | | | |
| 3 | C26-28-SSQ | 19,2 | 1.49 | 0.2 | 80 | 80 | 70 |
| | PCD-A | 25.8 | 4.43 | 0.8 | | | |
| 3a | C26-28-SSQ | 19.2 | 3.72 | 0.5 | 80 | 70 | 60 |
| | PCD-A | 25.8 | 2.77 | 0.5 | | | |
| 3b | C26-28-SSQ | 19.2 | 5.95 | 0.8 | 70 | 50 | 50 |
| | PCD-A | 25.8 | 1.11 | 0.2 | | | |
| 4 | C26-28-SSQ | 19.2 | 5.96 | 0.8 | 75 | 80 | 70 |
| | PCD-B | 25.0 | 1.15 | 0.2 | | | |
| CE1 | PCD-A | 25.8 | 5.54 | 1.0 | 75 | 80 | 70 |
| CE2 | C18-SSQ | 15.0 | 9.53 | 1.0 | 80 | 70 | 0 |
| CE3 | C26-28-SSQ | 19.2 | 7.44 | 1.0 | 50 | 0 | 0 |

**Table 3 - Treatments on NTD Nylon fabric (66% WPU)**

| Example | Composition (emulsion type) | % Solids | Amount of emulsion (grams) | % SOF | Spray Rating (initial) | Spray Rating (5L) | Spray Rating (20L) |
|---|---|---|---|---|---|---|---|
| 1 | C18-SSQ | 15.0 | 1.90 | 0.2 | 100 | 90 | 70 |
| | PCD-A | 25.8 | 4.43 | 0.8 | | | |
| 1a | C18-SSQ | 15.0 | 4.76 | 0.5 | 100 | 85 | 60 |
| | PCD-A | 25.8 | 2.77 | 0.5 | | | |
| 1b | C18-SSQ | 15.0 | 7.62 | 0.8 | 95 | 70 | 50 |
| | PCD-A | 25.8 | 1.11 | 0.2 | | | |
| 2 | C18-SSQ | 15.0 | 1.91 | 0.2 | 100 | 95 | 85 |
| | PCD-B | 25.0 | 4.57 | 0.8 | | | |
| 2a | C18-SSQ | 15.0 | 7.62 | 0.8 | 100 | 85 | 50 |
| | PCD-B | 25.0 | 1.15 | 0.2 | | | |
| 3 | C26-28-SSQ | 19,2 | 1.49 | 0.2 | 85 | 80 | 60 |
| | PCD-A | 25.8 | 4.43 | 0.8 | | | |
| 3a | C26-28-SSQ | 19.2 | 3.72 | 0.5 | 85 | 70 | 50 |
| | PCD-A | 25.8 | 2.77 | 0.5 | | | |
| 3b | C26-28-SSQ | 19.2 | 5.95 | 0.8 | 70 | 50 | 0 |
| | PCD-A | 25.8 | 1.11 | 0.2 | | | |
| 4 | C26-28-SSQ | 19.2 | 5.96 | 0.8 | 85 | 75 | 50 |
| | PCD-B | 25.0 | 1.15 | 0.2 | | | |
| CE1 | PCD-A | 25.8 | 5.54 | 1.0 | 85 | 80 | 60 |
| CE2 | C18-SSQ | 15.0 | 9.53 | 1.0 | 90 | 0 | 0 |
| CE3 | C26-28-SSQ | 19.2 | 7.44 | 1.0 | 50 | 0 | 0 |

### Example 5 (Mixing D4-C18 Cyclic Siloxane and PCD-B emulsions)

D4-C18 cyclic siloxane emulsion (1.41 grams) and 4.57 grams of PCD-B emulsion were each added separately into 94.02 grams of DI water and then mixed well before fabric immersion and treatment per the "Treatment Procedure via "Padding" Process." The mass ratio of SOF was varied by adjusting the amount of the D4-C18 cyclic siloxane and PCD-B emulsions as indicated Tables 4 and 5 (Example 5a). Treatments were applied to both nylon (NTD) and polyester (PPP) fabric substrates.

### Example 6 (Mixing D4-C26-28 Cyclic Siloxane and PCD-B emulsions)

D4-C26-28 cyclic siloxane emulsion (1.51 grams) and 4.57 grams of PCD-B emulsion were each added separately into 93.92 grams of DI water and then mixed well before fabric immersion and treatment per the "Treatment Procedure via "Padding" Process." The mass ratio of SOF was varied by adjusting the amount of the D4-C26-28 and PCD-B emulsions as indicated Tables 4 and 5 (Example 6a). Treatments were applied to both nylon (NTD) and polyester (PPP) fabric substrates.

### Example 7 (Mixing D4-C30 Cyclic Siloxane and PCD-B emulsions)

D4-C30 cyclic siloxane emulsion (1.39 grams) and 4.57 grams of PCD-B emulsion were each added separately into 94.04 grams of DI water and then mixed well before fabric immersion and treatment per the "Treatment Procedure via "Padding" Process." The mass ratio of SOF was varied by adjusting the amount of the D4-C30 and PCD-B emulsions as indicated Tables 4 and 5 (Example 7a). Treatments were applied to both nylon (NTD) and polyester (PPP) fabric substrates.

### Example 8 (Mixing D4-C18 Cyclic Siloxane and PCD-A emulsions)

D4-C18 cyclic siloxane emulsion (1.41 grams) and 4.43 grams of PCD-A emulsion were each added separately into 94.16 grams of DI water and then mixed well before fabric immersion and treatment per the "Treatment Procedure via "Padding" Process." The mass ratio of SOF was varied by adjusting the amount of the D4-C18 cyclic siloxane and PCD-A emulsions as indicated Tables 4 and 5 (Example 8a). Treatments were applied to both nylon (NTD) and polyester (PPP) fabric substrates.

### Example 9 (Mixing D4-C26-28 Cyclic Siloxane and PCD-A emulsions)

D4-C26-28 cyclic siloxane emulsion (1.51 grams) and 4.43 grams of PCD-A emulsion were each added separately into 94.06 grams of DI water and then mixed well before fabric immersion and treatment per the "Treatment Procedure via "Padding" Process." The mass ratio of SOF was varied by adjusting the amount of the D4-C26-28 and PCD-A emulsions as indicated Tables 4 and 5 (Example 9a). Treatments were applied to both nylon (NTD) and polyester (PPP) fabric substrates.

### Example 10 (Mixing D4-C30 Cyclic Siloxane and PCD-A emulsions)

D4-C30 cyclic siloxane emulsion (1.39 grams) and 4.43 grams of PCD-B emulsion were each added separately into 94.18 grams of DI water and then mixed well before fabric immersion and treatment per the "Treatment Procedure via "Padding" Process." The mass ratio of SOF was varied by adjusting the amount of the D4-C30 and PCD-B emulsions as indicated Tables 4 and 5 (Example 10a). Treatments were applied to both nylon (NTD) and polyester (PPP) fabric substrates.

The treated fabrics of Examples 5-10 were tested for their dynamic water repellent properties using the Spray Rating (SR) test as described herein. Spray rating was measured initially and after laundering. The D4-C18, D4-C26-28 and D4-C30 cyclic siloxane emulsions alone were also tested for comparison (CE4, CE5 and CE6). The Spray Rating data are reported in Tables 4 and 5.

**Table 4 - Treatments on PPP Polyester fabric (73% WPU)**

| Example | Composition (emulsion type) | % Solids | Amount of emulsion (grams) | % SOF | Spray Rating (initial) | Spray Rating (5L) | Spray Rating (20L) |
|---|---|---|---|---|---|---|---|
| 5 | D4-C18 | 20.2 | 1.41 | 0.2 | 100 | 100 | 80 |
| | PCD-B | 25.0 | 4.57 | 0.8 | | | |
| 5a | D4-C18 | 20.2 | 3.54 | 0.5 | 80 | 75 | 60 |
| | PCD-B | 25.0 | 2.86 | 0.5 | | | |
| 6 | D4-C26-28 | 18.9 | 1.51 | 0.2 | 100 | 100 | 90 |
| | PCD-B | 25.0 | 4.57 | 0.8 | | | |
| 6a | D4-C26-28 | 18.9 | 3.78 | 0.5 | 90 | 95 | 80 |
| | PCD-B | 25.0 | 2.86 | 0.5 | | | |
| 7 | D4-C30 | 20.5 | 1.39 | 0.2 | 100 | 95 | 85 |
| | PCD-B | 25.0 | 4.57 | 0.8 | | | |
| 7a | D4-C30 | 20.5 | 3.48 | 0.5 | 90 | 90 | 70 |
| | PCD-B | 25.0 | 2.86 | 0.5 | | | |
| 8 | D4-C18 | 20.2 | 1.41 | 0.2 | 80 | 80 | 70 |
| | PCD-A | 25.8 | 4.43 | 0.8 | | | |
| 8a | D4-C18 | 20.2 | 3.54 | 0.5 | 75 | 70 | 70 |
| | PCD-A | 25.8 | 2.77 | 0.5 | | | |
| 9 | D4-C26-28 | 18.9 | 1.51 | 0.2 | 75 | 75 | 70 |
| | PCD-A | 25.8 | 4.43 | 0.8 | | | |
| 9a | D4-C26-28 | 18.9 | 3.78 | 0.5 | 75 | 75 | 70 |
| | PCD-A | 25.8 | 2.77 | 0.5 | | | |
| 10 | D4-C30 | 20.5 | 1.39 | 0.2 | 80 | 85 | 75 |
| | PCD-A | 25.8 | 4.43 | 0.8 | | | |
| 10a | D4-C30 | 20.5 | 3.48 | 0.5 | 80 | 75 | 70 |
| | PCD-A | 25.8 | 2.77 | 0.5 | | | |
| CE4 | D4-C18 | 20.2 | 7.07 | 1.0 | 0 | 0 | 0 |
| CE5 | D4-C26-28 | 18.9 | 7.56 | 1.0 | 0 | 0 | 0 |
| CE6 | D4-C30 | 20.5 | 6.97 | 1.0 | 50 | 0 | 0 |

**Table 5 - Treatments on NTD Nylon fabric (66% WPU)**

| Example | Composition (emulsion type) | % Solids | Amount of emulsion (grams) | % SOF | Spray Rating (initial) | Spray Rating (5L) | Spray Rating (20L) |
|---|---|---|---|---|---|---|---|
| 5 | D4-C18 | 20.2 | 1.41 | 0.2 | 95 | 90 | 80 |
| | PCD-B | 25.0 | 4.57 | 0.8 | | | |
| 5a | D4-C18 | 20.2 | 3.54 | 0.5 | 80 | 70 | 60 |
| | PCD-B | 25.0 | 2.86 | 0.5 | | | |
| 6 | D4-C26-28 | 18.9 | 1.51 | 0.2 | 100 | 100 | 85 |
| | PCD-B | 25.0 | 4.57 | 0.8 | | | |
| 6a | D4-C26-28 | 18.9 | 3.78 | 0.5 | 85 | 90 | 70 |
| | PCD-B | 25.0 | 2.86 | 0.5 | | | |
| 7 | D4-C30 | 20.5 | 1.39 | 0.2 | 100 | 95 | 80 |
| | PCD-B | 25.0 | 4.57 | 0.8 | | | |
| 7a | D4-C30 | 20.5 | 3.48 | 0.5 | 90 | 85 | 60 |
| | PCD-B | 25.0 | 2.86 | 0.5 | | | |
| 8 | D4-C18 | 20.2 | 0.2 | 1.41 | 85 | 75 | 50 |
| | PCD-A | 25.0 | 0.8 | 4.43 | | | |
| 8a | D4-C18 | 20.2 | 0.5 | 3.54 | 80 | 70 | 50 |
| | PCD-A | 25.0 | 0.5 | 2.77 | | | |
| 9 | D4-C26-28 | 18.9 | 0.2 | 1.51 | 80 | 80 | 60 |
| | PCD-A | 25.0 | 0.8 | 4.43 | | | |
| 9a | D4-C26-28 | 18.9 | 0.5 | 3.78 | 75 | 70 | 50 |
| | PCD-A | 25.0 | 0.5 | 2.77 | | | |
| 10 | D4-C30 | 20.5 | 0.2 | 1.39 | 85 | 80 | 60 |
| | PCD-A | 25.0 | 0.8 | 4.43 | | | |
| 10a | D4-C30 | 20.5 | 0.5 | 3.48 | 80 | 70 | 50 |
| | PCD-A | 25.0 | 0.5 | 2.77 | | | |
| CE4 | D4-C18 | 20.2 | 7.07 | 1.0 | 0 | 0 | 0 |
| CE5 | D4-C26-28 | 18.9 | 7.56 | 1.0 | 0 | 0 | 0 |
| CE6 | D4-C30 | 20.5 | 6.97 | 1.0 | 50 | 50 | 0 |

### Example 11 (C18-SSQ/PCD-A Co-emulsion)

C18-SSQ emulsion (7.4 grams) was dissolved in 35.77 grams of ethylacetate at 65°C in a 1liter three-neck round-bottomed flask. To this was added 49.33 grams of PCD-A in ethylacetate (60.1% solids), followed by mixing 65°C to provide Solution A. Next, 0.99 grams of ETHOQUAD C-12, 2.22 grams of TERGITOL TMN-6 and 1.11 grams of TERGITOL 15-S-30 were dissolved in 148 grams DI water in a 1 liter glass beaker at 65°C to provide Solution B. Solutions A and B were mixed together and stirred for 15 minutes at 65°C. This premix was then homogenized by passing by passing the mixture two times through a homogenizer (Model HC8000, Microfluidics Corp., Westwood, MA) at 65°C. Ethyl acetate was then removed by vacuum distillation at 40°C. The solid content of the obtained C18-SSQ/PCD-A(A/B) emulsion was 20.9%.

The Example 11 emulsion was applied to both nylon (NTD) and polyester (PPP) fabric substrates per the "Treatment Procedure via "Padding" Process". The treated fabrics were tested for their dynamic water repellent properties using the Spray Rating (SR) test as described herein. Spray rating was measured initially and after laundering. The Spray Rating data are reported in Tables 6 and 7.

### Example 12 (C18-SSQ/PCD-B Co-emulsion)

C18-SSQ emulsion (7.4 grams) was dissolved in 35.77 grams of ethylacetate at 65°C in a 1liter three-neck round-bottomed flask. To this was added 49.33 grams of PCD-B in ethylacetate (60.1% solids), followed by mixing 65°C to provide Solution A. Next, 0.99 grams of ETHOQUAD C-12, 2.22 grams of TERGITOL TMN-6 and 1.11 grams of TERGITOL 15-S-30 were dissolved in 148 grams DI water in a 1 liter glass beaker at 65°C to provide Solution B. Solutions A and B were mixed together and stirred for 15 minutes at 65°C. This premix was then homogenized by passing by passing the mixture two times through a homogenizer (Model HC8000, Microfluidics Corp., Westwood, MA) at 65°C. Ethyl acetate was then removed by vacuum distillation at 40°C. The solid content of the obtained C18-SSQ/PCD-B(A/B) emulsion was 22.1%.

The Example 12 emulsion was applied to both nylon (NTD) and polyester (PPP) fabric substrates per the "Treatment Procedure via "Padding" Process". The treated fabrics were tested for their dynamic water repellent properties using the Spray Rating (SR) test as described herein. Spray rating was measured initially and after laundering. The Spray Rating data are reported in Tables 6 and 7.

**Table 6 - Treatments on PPP Polyester fabric (73% WPU)**

| Example | Composition (emulsion type) | % Solids | Amount of emulsion (grams) | % SOF | Spray Rating (initial) | Spray Rating (5L) | Spray Rating (20L) |
|---|---|---|---|---|---|---|---|
| 11 | C18-SSQ/PCD-A (A/B) | 20.9 | 6.84 | 1.0 | 100 | 95 | 90 |
| 12 | C18-SSQ/PCD-B (A/B) | 22.1 | 6.46 | 1.0 | 95 | 90 | 90 |

**Table 7 - Treatments on NTD Nylon fabric (66% WPU)**

| Example | Composition (emulsion type) | % Solids | Amount of emulsion (grams) | % SOF | Spray Rating (initial) | Spray Rating (5L) | Spray Rating (20L) |
|---|---|---|---|---|---|---|---|
| 11 | C18-SSQ/PCD-A (A/B) | 20.9 | 6.84 | 1.0 | 100 | 90 | 70 |
| 12 | C18-SSQ/PCD-B (A/B) | 22.1 | 6.46 | 1.0 | 100 | 85 | 80 |

## Claims

1. A treating composition comprising:
a polycarbodiimide; and
a silicon-containing compound selected from a cyclic siloxane compound, a silsesquioxane polymer, and a mixture thereof;
wherein the cyclic siloxane compound is of Formula (I): 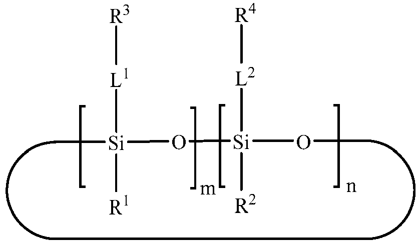 wherein:
each R¹ and R² is independently a (C1-C4)alkyl;
each L¹ and L² is independently a single bond, an alkylene, or an alkylene bonded to a group selected from oxy, thio, carbonyl, -NH-, and combinations thereof;
each R³ is independently a linear (C14-C100)alkyl;
each R⁴ is independently a (C1-C30)alkyl, a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group;
with the proviso that L¹, L², and R⁴ are selected such that each Si atom is directly bonded to an alkylene or an alkyl (other than R¹ and R²);
m is an integer of at least 2;
n is an integer of 0 or above;
m + n is an integer of at least 3; and
the cyclic siloxane compound is a solid at 25°C; and
wherein the silsesquioxane polymer comprises a three-dimensional network of Formula (II): 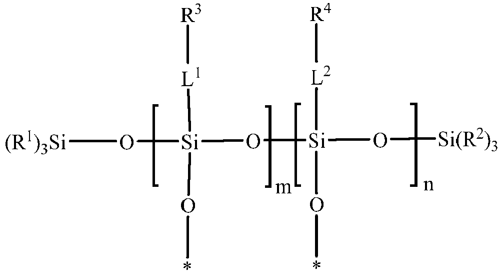 wherein:
each R¹ and R² is independently a (C1-C4)alkyl;
each L¹ and L² is independently a single bond, an alkylene, or an alkylene bonded to a group selected from oxy, thio, carbonyl, -NH-, and combinations thereof;
each R³ is independently a linear (C14-C100)alkyl;
each R⁴ is independently a (C1-C30)alkyl, a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group;
with the proviso that L¹, L², and R⁴ are selected such that each Si atom is directly bonded to an alkylene or an alkyl;
m is an integer of at least 2;
n is an integer of 0 or above;
m + n is an integer of at least 3;
each oxygen atom at an asterisk (*) is bonded to another Si atom within the three-dimensional network; and
the silsesquioxane polymer is a solid at 25°C.

2. The treating composition of claim 1 wherein, in Formula (I), m ÷ (m + n) is at least 0.50 and up to 1.0.

3. The treating composition of claim 1 or 2 wherein, in Formula (I), each R³ is independently a linear (C14-C60)alkyl.

4. The treating composition of any one of claims 1 through 3 wherein, in Formula (I), each L¹ and L² is a single bond.

5. The treating composition of any one of claims 1 through 4 wherein, in Formula (I), each R⁴ is independently a (C1-C30)alkyl.

6. The treating composition of any one of claims 1 through 4 wherein, in Formula (I), each R⁴ is independently a (C2-C30)heteroalkyl having at least one oxygen, sulfur, or - NH- group, or a (C1-C30)alkyl substituted with a fluoro, thiol, isocyanato, cyanato, hydroxyl, glycidoxy, or epoxy group.

7. The treating composition of any one of claims 1 through 4 wherein, in Formula (I), at least a portion of the R⁴ groups are independently a (C1-C30)alkyl, and at least a portion of the R⁴ groups are independently a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group.

8. The treating composition of any one of the previous claims wherein, in Formula (II), m ÷ (m + n) is at least 0.50 and up to 1.0.

9. The treating composition of any one of the previous claims wherein, in Formula (II), each R³ is independently a linear (C14-C60)alkyl.

10. The treating composition of any one of claims 1 through 9 wherein, in Formula (II), each L¹ and L² is a single bond.

11. The treating composition of any one of claims 1 through 10 wherein, in Formula (II), each R⁴ is independently a (C1-C30)alkyl.

12. The treating composition of any one of claims 1 through 10 wherein, in Formula (II), each R⁴ is independently a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group.

13. The treating composition of any one of claims 1 through 10 wherein, in Formula (II), at least a portion of the R⁴ groups are independently a (C1-C30)alkyl, and at least a portion of the R⁴ groups are independently a (C2-C30)heteroalkyl having at least one oxygen, sulfur, or -NH- group, or a (C1-C30)alkyl substituted with a fluoro, thiol, isocyanato, cyanato, hydroxyl, glycidoxy, or epoxy group.

14. The treating composition of any one of the previous claims, wherein the silicon-containing compound is present in an amount of at least 10 wt-% and up to 70 wt-%, based on the total weight of solids in a treating composition.

15. The treating composition of any one of the previous claims, wherein the polycarbodiimide is present in an amount of at least 30 wt-% and up to 90 wt-%, based on the total weight of solids in a treating composition.

## Patentansprüche

1. Eine Behandlungszusammensetzung, umfassend:
ein Polycarbodiimid; und
eine siliciumhaltige Verbindung, ausgewählt aus einer cyclischen Siloxanverbindung, einem Silsesquioxanpolymer und einer Mischung davon;
wobei die cyclische Siloxanverbindung die Formel (I) aufweist: 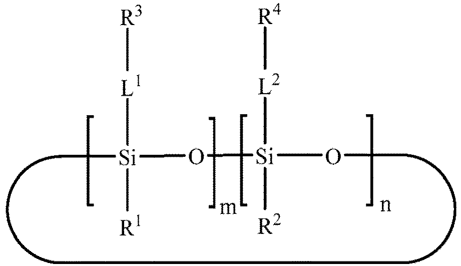 wobei:
jedes R¹ und R² unabhängig ein (C1-C4)-Alkyl ist;
jedes L¹ und L² unabhängig eine Einfachbindung, ein Alkylen oder ein Alkylen ist, das an eine Gruppe gebunden ist, die aus Oxy, Thio, Carbonyl, -NH- und Kombinationen davon ausgewählt ist;
jedes R³ unabhängig ein lineares (C14-C100)-Alkyl ist;
jedes R⁴ unabhängig ein (C1-C30)-Alkyl, ein (C2-C30)-Heteroalkyl mit mindestens einer Sauerstoff-, Schwefel- oder -NH-Gruppe oder ein mit einer Fluor-, Thiol-, Isocyanat-, Cyanat-, Hydroxyl-, Glycidoxy- oder Epoxygruppe substituiertes (C1-C30)-Alkyl ist;
mit der Maßgabe, dass L¹, L² und R⁴ so ausgewählt sind, dass jedes Si-Atom direkt an ein Alkylen oder ein Alkyl (das sich von R¹ und R² unterscheidet) gebunden ist;
m eine ganze Zahl von mindestens 2 ist;
n eine ganze Zahl von 0 oder höher ist;
m + n eine ganze Zahl von mindestens 3 ist; und
die cyclische Siloxanverbindung bei 25 °C ein Feststoff ist; und
wobei ein Silsesquioxanpolymer ein dreidimensionales Netz der Formel (II) umfasst: 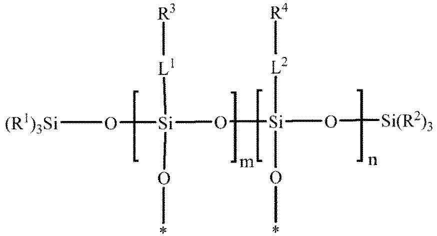 wobei:
jedes R¹ und R² unabhängig ein (C1-C4)-Alkyl ist;
jedes L¹ und L² unabhängig eine Einfachbindung, ein Alkylen oder ein Alkylen ist, das an eine Gruppe gebunden ist, die aus Oxy, Thio, Carbonyl, -NH-und Kombinationen davon ausgewählt ist;
jedes R³ unabhängig ein lineares (C14-C100)-Alkyl ist;
jedes R⁴ unabhängig ein (C1-C30)-Alkyl, ein (C2-C30)-Heteroalkyl mit mindestens einer Sauerstoff-, Schwefel- oder -NH-Gruppe oder ein mit einer Fluor-, Thiol-, Isocyanat-, Cyanat-, Hydroxyl-, Glycidoxy- oder Epoxygruppe substituiertes (C1-C30)-Alkyl ist;
mit der Maßgabe, dass L¹, L² und R⁴ so ausgewählt sind, dass jedes Si-Atom direkt an ein Alkylen oder ein Alkyl gebunden ist;
m eine ganze Zahl von mindestens 2 ist;
n eine ganze Zahl von 0 oder höher ist;
m + n eine ganze Zahl von mindestens 3 ist;
jedes Sauerstoffatom an einem Stern (*) an ein anderes Si-Atom im dreidimensionalen Netz gebunden ist; und
das Silsesquioxanpolymer bei 25 °C ein Feststoff ist.

2. Die Behandlungszusammensetzung nach Anspruch 1, wobei in Formel (I) m / (m+ n) mindestens 0,50 und bis zu 1,0 beträgt.

3. Die Behandlungszusammensetzung nach Anspruch 1 oder 2, wobei in Formel (I) jedes R³ unabhängig ein lineares (C14-C60)-Alkyl ist.

4. Die Behandlungszusammensetzung nach einem der Ansprüche 1 bis 3, wobei in Formel (I) jedes L¹ und L² eine Einfachbindung ist.

5. Die Behandlungszusammensetzung nach einem der Ansprüche 1 bis 4, wobei in Formel (I) jedes R⁴ unabhängig ein (C1-C30)-Alkyl ist.

6. Die Behandlungszusammensetzung nach einem der Ansprüche 1 bis 4, wobei in Formel (I) jedes R⁴ unabhängig ein (C2-C30)-Heteroalkyl mit mindestens einer Sauerstoff-, Schwefel- oder -NH-Gruppe oder ein mit einer Fluor-, Thiol-, Isocyanat-, Cyanat-, Hydroxyl-, Glycidoxy- oder Epoxygruppe substituiertes (C1-C30)-Alkyl ist.

7. Die Behandlungszusammensetzung nach einem der Ansprüche 1 bis 4, wobei in Formel (I) zumindest ein Teil der R⁴-Gruppen unabhängig ein (C1-C30)-Alkyl ist und zumindest ein Teil der R⁴-Gruppen unabhängig ein (C2-C30)-Heteroalkyl mit mindestens einer Sauerstoff-, Schwefel- oder -NH-Gruppe oder ein mit einer Fluor-, Thiol-, Isocyanat-, Cyanat-, Hydroxyl-, Glycidoxy- oder Epoxygruppe substituiertes (C1-C30)-Alkyl ist.

8. Die Behandlungszusammensetzung nach einem der vorstehenden Ansprüche, wobei in Formel (II) m / (m + n) mindestens 0,50 und bis zu 1,0 beträgt.

9. Die Behandlungszusammensetzung nach einem der vorstehenden Ansprüche, wobei in Formel (II) jedes R³ unabhängig ein lineares (C14-C60)-Alkyl ist.

10. Die Behandlungszusammensetzung nach einem der Ansprüche 1 bis 9, wobei in Formel (II) jedes L¹ und L² eine Einfachbindung ist.

11. Die Behandlungszusammensetzung nach einem der Ansprüche 1 bis 10, wobei in Formel (II) jedes R⁴ unabhängig ein (C1-C30)-Alkyl ist.

12. Die Behandlungszusammensetzung nach einem der Ansprüche 1 bis 10, wobei in Formel (II) jedes R⁴ unabhängig ein (C2-C30)-Heteroalkyl mit mindestens einer Sauerstoff-, Schwefel- oder -NH-Gruppe oder ein mit einer Fluor-, Thiol-, Isocyanat-, Cyanat-, Hydroxyl-, Glycidoxy- oder Epoxygruppe substituiertes (C1-C30)-Alkyl ist.

13. Die Behandlungszusammensetzung nach einem der Ansprüche 1 bis 10, wobei in Formel (II) zumindest ein Teil der R⁴-Gruppen unabhängig ein (C1-C30)-Alkyl ist und zumindest ein Teil der R⁴-Gruppen unabhängig ein (C2-C30)-Heteroalkyl mit mindestens einer Sauerstoff-, Schwefel- oder -NH-Gruppe oder ein mit einer Fluor-, Thiol-, Isocyanat-, Cyanat-, Hydroxyl-, Glycidoxy- oder Epoxygruppe substituiertes (C1-C30)-Alkyl ist.

14. Die Behandlungszusammensetzung nach einem der vorstehenden Ansprüche, wobei die siliciumhaltige Verbindung in einer Menge von mindestens 10 Gew.-% und bis zu 70 Gew.-%, bezogen auf das Gesamtgewicht von Feststoffen in einer Behandlungszusammensetzung, vorliegt.

15. Die Behandlungszusammensetzung nach einem der vorstehenden Ansprüche, wobei das Polycarbodiimid in einer Menge von mindestens 30 Gew.-% und bis zu 90 Gew.-%, bezogen auf das Gesamtgewicht von Feststoffen in einer Behandlungszusammensetzung, vorliegt.

## Revendications

1. Composition de traitement comprenant :
un polycarbodiimide ; et
un composé contenant du silicium choisi parmi un composé de siloxane cyclique, un polymère de silsesquioxane, et un mélange de ceux-ci ;
dans laquelle le composé de siloxane cyclique est de Formule (I) : 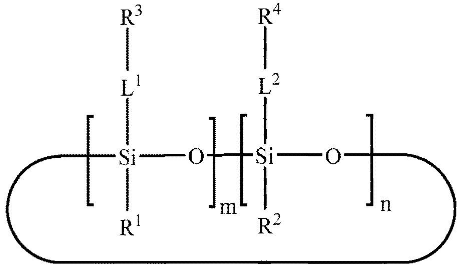 dans laquelle :
chaque R¹ et R² est indépendamment un alkyle en (C1 à C4) ;
chaque L¹ et L² est indépendamment une liaison simple, un alkylène, ou un alkylène lié à un groupe choisi parmi oxy, thio, carbonyle, -NH-, et des combinaisons de ceux-ci ;
chaque R³ est indépendamment un alkyle linéaire en (C14 à C100) ;
chaque R⁴ est indépendamment un alkyle en (C1 à C30), un hétéroalkyle en (C2 à C30) ayant au moins un groupe oxygène, soufre, ou -NH-, ou un alkyle en (C1 à C30) substitué avec un groupe fluoro, thiol, isocyanato, cyanato, hydroxyle, glycidoxy, ou époxy ;
à condition que L¹, L² et R⁴ soient choisis de telle sorte que chaque atome de Si est lié directement à un alkylène ou à un alkyle (autre que R¹ et R²) ;
m est un nombre entier d'au moins 2 ;
n est un nombre entier de 0 ou plus ;
m + n est un nombre entier d'au moins 3 ; et
le composé de siloxane cyclique est un solide à 25 °C ; et
dans laquelle le polymère de silsesquioxane comprend un réseau tridimensionnel de Formule (II) : 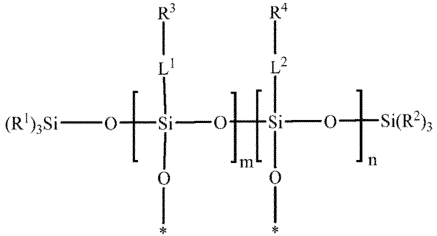 dans laquelle :
chaque R¹ et R² est indépendamment un alkyle en (C1 à C4) ;
chaque L¹ et L² est indépendamment une liaison simple, un alkylène, ou un alkylène lié à un groupe choisi parmi oxy, thio, carbonyle, -NH-, et des combinaisons de ceux-ci ;
chaque R³ est indépendamment un alkyle linéaire en (C14 à C100) ;
chaque R⁴ est indépendamment un alkyle en (C1 à C30), un hétéroalkyle en (C2 à C30) ayant au moins un groupe oxygène, soufre, ou -NH-, ou un alkyle en (C1 à C30) substitué avec un groupe fluoro, thiol, isocyanato, cyanato, hydroxyle, glycidoxy, ou époxy ;
à condition que L¹, L², et R⁴ soient choisis de telle sorte que chaque atome de Si est directement lié à un alkylène ou à un alkyle ;
m est un nombre entier d'au moins 2 ;
n est un nombre entier de 0 ou plus ;
m + n est un nombre entier d'au moins 3 ;
chaque atome d'oxygène au niveau d'un astérisque (*) est lié à un autre atome de Si au sein du réseau tridimensionnel ; et
le polymère de silsesquioxane est un solide à 25 °C.

2. Composition de traitement selon la revendication 1 dans laquelle, dans la Formule (I), m / (m + n) vaut au moins 0,50 et va jusqu'à 1,0.

3. Composition de traitement selon la revendication 1 ou 2 dans laquelle, dans la Formule (I), chaque R³ est indépendamment un alkyle linéaire en (C14 à C60).

4. Composition de traitement selon l'une quelconque des revendications 1 à 3 dans laquelle, dans la Formule (I), chaque L¹ et L² est une liaison simple.

5. Composition de traitement selon l'une quelconque des revendications 1 à 4 dans laquelle, dans la Formule (I), chaque R⁴ est indépendamment un alkyle en (C1 à C30).

6. Composition de traitement selon l'une quelconque des revendications 1 à 4 dans laquelle, dans la Formule (I), chaque R⁴ est indépendamment un hétéroalkyle en (C2 à C30) ayant au moins un groupe oxygène, soufre, ou -NH-, ou un alkyle en (C1 à C30) substitué avec un groupe fluoro, thiol, isocyanato, cyanato, hydroxyle, glycidoxy, ou époxy.

7. Composition de traitement selon l'une quelconque des revendications 1 à 4 dans laquelle, dans la Formule (I), au moins une partie des groupes R⁴ sont indépendamment un alkyle en (C1 à C30), et au moins une partie des groupes R⁴ sont indépendamment un hétéroalkyle en (C2 à C30) ayant au moins un groupe oxygène, soufre, ou -NH-, ou un alkyle en (C1 à C30) substitué avec un groupe fluoro, thiol, isocyanato, cyanato, hydroxyle, glycidoxy, ou époxy.

8. Composition de traitement selon l'une quelconque des revendications précédentes dans laquelle, dans la Formule (II), m / (m + n) vaut au moins 0,50 et va jusqu'à 1,0.

9. Composition de traitement selon l'une quelconque des revendications précédentes dans laquelle, dans la Formule (II), chaque R³ est indépendamment un alkyle linéaire en (C14 à C60).

10. Composition de traitement selon l'une quelconque des revendications 1 à 9 dans laquelle, dans la Formule (II), chaque L¹ et L² est une liaison simple.

11. Composition de traitement selon l'une quelconque des revendications 1 à 10 dans laquelle, dans la Formule (II), chaque R⁴ est indépendamment un alkyle en (C1 à C30).

12. Composition de traitement selon l'une quelconque des revendications 1 à 10 dans laquelle, dans la Formule (II), chaque R⁴ est indépendamment un hétéroalkyle en (C2 à C30) ayant au moins un groupe oxygène, soufre, ou -NH-, ou un alkyle en (C1 à C30) substitué avec un groupe fluoro, thiol, isocyanato, cyanato, hydroxyle, glycidoxy, ou époxy.

13. Composition de traitement selon l'une quelconque des revendications 1 à 10 dans laquelle, dans la Formule (II), au moins une partie des groupes R⁴ sont indépendamment un alkyle en (C1 à C30), et au moins une partie des groupes R⁴ sont indépendamment un hétéroalkyle en (C2 à C30) ayant au moins un groupe oxygène, soufre, ou -NH-, ou un alkyle en (C1 à C30) substitué avec un groupe fluoro, thiol, isocyanato, cyanato, hydroxyle, glycidoxy, ou époxy.

14. Composition de traitement selon l'une quelconque des revendications précédentes, dans laquelle le composé contenant du silicium est présent en une quantité d'au moins 10 % en poids et jusqu'à 70 % en poids, sur la base du poids total de solides dans une composition de traitement.

15. Composition de traitement selon l'une quelconque des revendications précédentes, dans laquelle le polycarbodiimide est présent en une quantité d'au moins 30 % en poids et jusqu'à 90 % en poids, sur la base du poids total de solides dans une composition de traitement.
